# EUROPEAN PATENT APPLICATION

(11) **EP 3 225 935 A1**
(43) Date of publication of application: **04.10.2017**
(21) Application number: 17162049.5
(22) Date of filing: 21.03.2017
(51) Int. Cl.: F24H 1/20, F24H 9/12

(54) **WATER HEATER**

(30) Priority: 23.03.2016 CN 201610168781
(71) Applicant: BSH Hausgeräte GmbH, 81739 München (DE)
(72) Inventor: Ling, Yuzheng, Nanjing,, Anhui 210000 (CN); Liu, lixin, Nanjing, Anhui 210000 (CN); Yu, Xianglei, Nanjing, Anhui (CN); Zhang, Yang, Chuzhou, Anhui (CN)

(57) **Abstract**

The present invention discloses a water heater, including a liner, a heating pipe disposed in the liner, and a water inlet pipe. A water inlet buffer apparatus is disposed above a water outlet of the water inlet pipe. The water inlet buffer apparatus includes: a water retaining cover installed on the water heating pipe; a deflector disposed on a lower wall surface of a top portion of the water retaining cover; and a flow guide channel disposed on the deflector. The deflector partitions a cavity in the water retaining cover into a first buffer area and a second buffer area; and the flow guide channel guides a part of water flow of the first buffer area to flow into the second buffer area and flow out of the second buffer area. The present invention resolves the problem in the prior art that a hot water output rate of a water heater is reduced due to an error of installation of a water inlet buffer apparatus of the water heater, so as to effectively buffer cold water, and reduce a moving speed of a water flow, thereby improving the hot water output rate of the water heater more effectively.

## Description

### BACKGROUND

### Technical Field

The present invention relates to the technical field of water heating devices, and specifically, to a water heater.

### Related Art

A water inlet is disposed on a bottom portion of a liner of an existing electric water heater to be connected to a water inlet pipe. Cold water enters the liner through the water inlet pipe and the water inlet. Some cold water strikes into upper-layer hot water of the liner to make a temperature of hot water decrease. Consequently, an output hot water quantity is reduced, and a hot water output rate of the water heater is reduced.

Currently, a buffer apparatus, for example, a baffle plate is disposed at a water inlet of a liner to reduce a water velocity of cold water, so as to prevent cold water from directly striking into upper-layer hot water of the liner, thereby improving a hot water output quantity. However, the foregoing buffer apparatus such as the baffle plate needs to be installed in the liner by means of welding or in another manner, and has a particular requirement for technologies. At the same time, if the buffer apparatus needs to be cleaned or replaced, the liner needs to be detached, and this is inconvenient.

In addition, in the prior art, a water retaining plate is disposed on a heating pipe to retain water. However, because in the existing process of installing the heating pipe, the water retaining plate easily inclines due to an error of installation, and a cold water buffer effect is affected, and even a failure is caused. Consequently, a hot water output rate of a water heater is affected.

Currently, an effective solution for resolving the problem that a hot water output rate of a water heater is reduced due to an error of installation of a water inlet buffer apparatus of the water heater has not been proposed.

### SUMMARY

The present invention provides a water heater, to resolve at least the problem that a hot water output rate of a water heater is reduced due to an error of installation of a water inlet buffer apparatus of the water heater in the prior art.

To achieve the objective, on one aspect, the present invention provides a water heater, which is mainly adapted to an electric water heater.

A water heater according to the present invention comprises a liner, a heating pipe disposed in the liner, and a water inlet pipe. A water inlet buffer apparatus is disposed above a water outlet of the water inlet pipe. The water inlet buffer apparatus comprises: a water retaining cover installed on the water heating pipe; a deflector disposed on a lower wall surface of a top portion of the water retaining cover; and a flow guide channel disposed on the deflector. The deflector partitions a cavity in the water retaining cover into a first buffer area and a second buffer area; and the flow guide channel guides a part of water flow of the first buffer area to flow into the second buffer area and flow out of the second buffer area. By installing the water retaining cover on the water heating pipe, the water retaining cover arid the water heating pipe may be installed inside the liner of the water heater together, to facilitate cleaning and replacement later on. On one aspect, the water retaining cover limits cold water of the water inlet pipe within the cavity of the water retaining cover to avoid direct impact of cold water on the liner and change a flow velocity of a water flow, and on the other aspect, a heating efficiency of cold water can be improved by installing the water retaining cover on the water heating pipe. The deflector can shunt cold water by means of the flow guide channel, to further buffer a water flow velocity. At the same time, the deflector can resolve the problem that a cold water buffer effect is affected by inclination of the water retaining cover due to an error of installation during a process of installing the heating pipe, and can ensure that a hot water output rate of the water heater is not affected.

Preferably, a side wall of the water retaining cover is closed and inclines towards a position of the water inlet pipe. A closed structure formed by four side walls of the water retaining cover forms the cavity for buffering cold water. At the same time, the four side walls incline inwards to further buffer a water flow. In addition, the water retaining cover needs to be installed to the liner through the end opening of the liner. Because the end opening of the liner is usually in a shape of a round hole, the water retaining cover is set into a shape with a wide top portion and a narrow bottom portion, to smoothly pass through the end opening of the liner.

Preferably, the flow guide channel is a flow guide slot or a flow guide hole.

Preferably, the deflector is detachably installed in the water retaining cover.

Preferably, an opening is disposed on the top portion of the water retaining cover. A first end of the deflector is inserted into the opening and installed into the cavity of the water retaining over, and a second end of the deflector is connected to a fixing plate configured to fix the deflector on the top portion of the water retaining cover. Such a detachable structure facilitates production and processing of components, and subsequent replacement, to reduce costs.

Preferably, the deflector and the fixing plate form an integral structure. Bendable adjustment may be performed between the deflector and fixing plate in the integral structure, to facilitate adjustment during processing or installation.

Preferably, openings that match each other for screw fixation are disposed on the top portion of the water retaining cover and the fixing plate.

Preferably, a pipe sleeve configured to clamp the heating pipe is disposed on the fixing plate. The water retaining cover, the deflector component, and the heating pipe can be integrally connected by means of the pipe sleeve structure. The structure is simple and facilitates installation and disassembly.

Preferably, two fixing plates are respectively symmetrically disposed on two sides of the second end of the deflector.

Preferably, the heating pipe is a U-shaped heating pipe comprising two horizontal heating pipes, wherein a width of the top portion of the water retaining cover is greater than a distance between the two horizontal heating pipes.

The present invention resolves at least the problem in the prior art that a hot water output rate of a water heater is reduced due to an error of installation of a water inlet buffer apparatus of the water heater, so as to effectively buffer cold water, and reduce a moving speed of a water flow, thereby improving the hot water output rate of the water heater more effectively. At the same time, the present invention enables a user to clean or replace the water inlet buffer apparatus, thereby avoiding damages brought to the water heater due to liner detachment.

### BRIEF DESCRIPTION OF THE DRAWINGS

The accompanying drawings described herein are used to provide further understanding of the present invention, and form a part of the present invention. Illustrative embodiments and descriptions thereof of the present invention are used to explain the present invention, and do not form inappropriate limitation to the present invention. In the accompanying drawings:
FIG. 1 is a schematic diagram of a water heater;
FIG. 2 is a schematic diagram (1) of a water inlet buffer apparatus;
FIG. 3 is a schematic diagram (2) of the water inlet buffer apparatus;
FIG. 4 is a schematic diagram (3) of the water inlet buffer apparatus;
FIG. 5 is a schematic diagram of a top portion of a water retaining cover; and
FIG. 6 is a schematic diagram of a deflector.

### DETAILED DESCRIPTION

The present invention is described in detail below with reference to the accompanying drawings and embodiments. It should be noted that embodiments in the present application and features in the embodiments may be combined with each other when they are not contradictory.

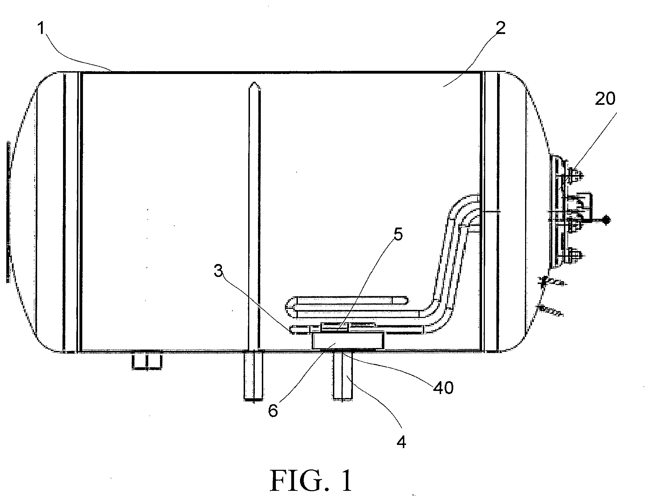

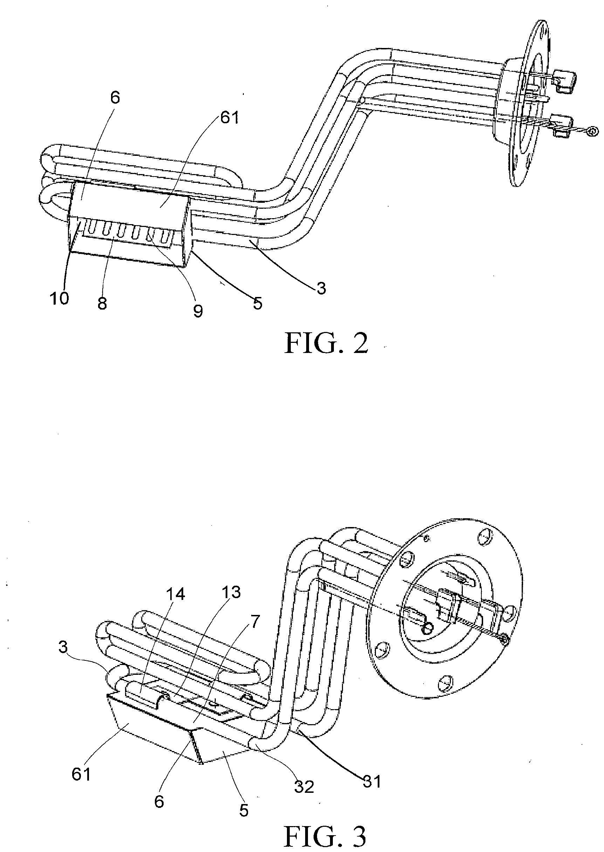

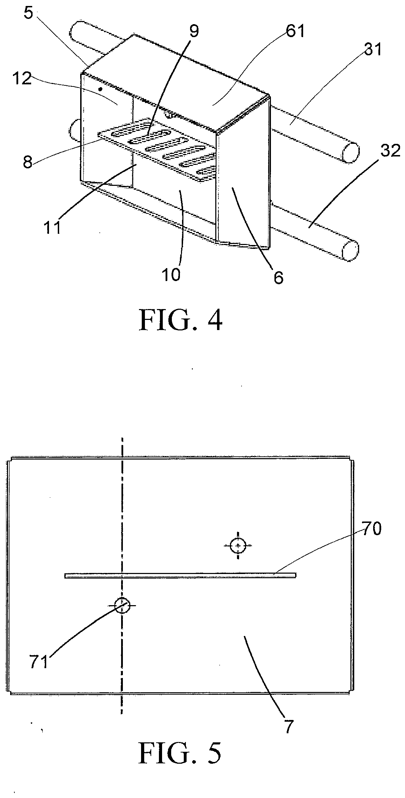

An embodiment of the present invention provides a water heater. FIG. 1 is a schematic diagram of a water heater; FIG. 2 is a schematic diagram (1) of a water inlet buffer apparatus; FIG. 3 is a schematic diagram (2) of the water inlet buffer apparatus; and FIG. 4 is a schematic diagram (3) of the water inlet buffer apparatus. As shown in FIG. 1 to FIG. 4,
the water heater 1 comprises a liner 2, a water heating pipe 3 disposed in the liner 2, and a water inlet pipe 4. A water inlet buffer apparatus 5 is disposed above a water outlet 40 of the water inlet pipe 4. The water inlet buffer apparatus 5 comprises: a water retaining cover 6 installed on the water heating pipe 3, a deflector 8 disposed on a lower wall surface 71 of a top portion 7 of the water retaining cover, and a flow guide channel 9 disposed on the deflector 8. The deflector 8 partitions a cavity 10 in the water retaining cover 6 into a first buffer area 11 and a second buffer area 12. The flow guide channel 9 guides a water flow of the first buffer area 11 to flow into the second buffer area 12 and flow out of the second buffer area 12.

By installing the water retaining cover 6 on the water heating pipe 3, the water retaining cover 6 and the water heating pipe 3 may be installed inside the liner 2 of the water heater together, to facilitate cleaning and replacement later on. On one aspect, the water retaining cover 6 limits cold water of the water inlet pipe 4 within the cavity 10 of the water retaining cover 6 to avoid direct impact of cold water on the liner 2 and change a flow velocity of a water flow, and on the other aspect, a heating efficiency of cold water can be improved by installing the water retaining cover 6 on the water heating pipe 3. The deflector 8 can shunt cold water by means of the flow guide channel 9, to further buffer a water flow velocity. Preferably, the flow guide channel 9 is a flow guide slot or a flow guide hole.

In the prior art, a water retaining plate is disposed on a heating pipe to retain water. However, because in the existing process of installing the heating pipe, the water retaining plate easily inclines due to an error of installation, and a cold water buffering effect is affected, and even a failure is caused. However, the first buffer area 11 and the second buffer area 12 formed by the deflector 8 in this embodiment resolve the foregoing problem. After entering the first buffer area 11, cold water enters the second buffer area 12 through the flow guide channel 9, so that buffering on cold water can still be ensured. Therefore, the water inlet buffer apparatus 5 can overcome the problem of the error of installation, so as to improve a hot water output rate of the water heater more effectively.

Preferably, as shown in FIG. 3 and FIG. 4, the water heater 1 in this embodiment is provided with multiple heating pipes. The foregoing heating pipe 3 is a U-shaped heating pipe comprising two horizontal heating pipes (31, 32). The U-shaped heating pipe is installed in a winding manner from an end opening 20 of the liner 2 and extends to a position close to the water inlet pipe 4 on a bottom portion of the liner 2. The water retaining cover 6 may be installed on the two horizontal heating pipes (31, 32) by means of welding or screw fastening. A width of the top portion 7 of the water retaining cover is greater than a distance between the two horizontal heating pipes (31, 32).

Preferably, as shown in FIG. 3 and FIG. 4, a side wall 61 of the water retaining cover 6 is closed and inclines towards a direction of the water inlet pipe 4. A closed structure formed by four side walls 61 of the water retaining cover forms the cavity 10 for buffering cold water. At the same time, the four side walls 61 incline inwards to further buffer a water flow. In addition, the water retaining cover 6 needs to be installed to the liner through the end opening 20 of the liner 2. Because the end opening 20 of the liner is usually in a shape of a round hole, the water retaining cover 6 is set into a shape with a wide top portion and a narrow bottom portion, to smoothly pass through the end opening 20 of the liner.

Preferably, the deflector 8 is detachably installed in the water retaining cover 6.

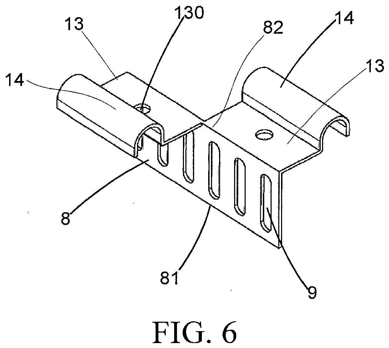

Specifically, FIG. 5 is a schematic diagram of the top portion of the water retaining cover, and FIG. 6 is a schematic diagram of the deflector. As shown in FIG. 5 and FIG. 6, an opening 70 is disposed on the top portion 7 of the water retaining cover. A first end 81 of the deflector 8 is inserted into the opening 70 and installed into the cavity 10 of the water retaining over, and a second end 82 of the deflector 8 is connected to a fixing plate 13 configured to fix the deflector 8 on the top portion 7 of the water retaining cover. Such a detachable structure facilitates production and processing of components, and subsequent replacement, to reduce costs.

Preferably, as shown in FIG. 6, the foregoing deflector 8 and fixing plate 13 form an integral structure. Bendable adjustment may be performed between the deflector 8 and fixing plate 13 in the integral structure, to facilitate adjustment during processing or installation. Correspondingly, openings (71, 130) that match each other for screw fixation are disposed on the top portion 7 of the water retaining cover and the fixing plate 13.

Preferably, as shown in FIG. 6, a pipe sleeve 14 configured to clamp the heating pipe 3 is disposed on the foregoing fixing plate 13. The water retaining cover 6, the deflector 8, and the heating pipe 3 can be integrally connected by means of the pipe sleeve 14. The structure is simple and facilitates installation and disassembly. Two fixing plates may be respectively symmetrically disposed on two sides of the second end 82 of the deflector 8, and two pipes 14 are also correspondingly disposed at the same time.

The present invention resolves at least the problem in the prior art that a hot water output rate of a water heater is reduced due to an error of installation of a water inlet buffer apparatus of the water heater, so as to effectively buffer cold water, and reduce a moving speed of a water flow, thereby improving the hot water output rate of the water heater more effectively. At the same time, the present invention enables a user to clean or replace the water inlet buffer apparatus, thereby avoiding damages brought to the water heater due to liner detachment.

Various specific implementation manners described in the foregoing and shown in the accompanying drawings are only used for describing the present invention, and are not regarded as the entirety of the present invention. Within the scope of the basic technical thought of the present invention, any types of modifications for the present invention made by persons ordinarily skilled in the art fall within the scope of the present invention.

## Claims

1. A water heater (1), comprising a liner (2), a heating pipe (3) disposed in the liner (2), and a water inlet pipe (4), wherein a water inlet buffer apparatus (5) is disposed above a water outlet (40) of the water inlet pipe (4), **characterized in that**, the water inlet buffer apparatus (5) comprises:
a water retaining cover (6) installed on the water heating pipe (3);
a deflector (8) disposed on a lower wall surface of a top portion (7) of the water retaining cover; and
a flow guide channel (9) disposed on the deflector (8), wherein
the deflector (8) partitions a cavity (10) in the water retaining cover (6) into a first buffer area (11) and a second buffer area (12); and the flow guide channel (9) guides a water flow of the first buffer area (11) to flow into the second buffer area (12) and flow out of the second buffer area (12).

2. The water heater according to claim 1, **characterized in that**:
a side wall (61) of the water retaining cover (6) is closed and inclines towards a position of the water inlet pipe (4).

3. The water heater according to claim 1, **characterized in that**:
the flow guide channel (9) is a flow guide slot or a flow guide hole.

4. The water heater according to claim 1, **characterized in that**:
the deflector (8) is detachably installed in the water retaining cover (6).

5. The water heater according to claim 4, **characterized in that**:
an opening (70) is disposed on the top portion (7) of the water retaining cover;
a first end (81) of the deflector (8) is inserted into the opening (70) and installed into the cavity (10) of the water retaining over (6); and
a second end (82) of the deflector (8) is connected to a fixing plate (13) configured to fix the deflector (8) on the top portion (7) of the water retaining cover.

6. The water heater according to claim 5, **characterized in that**:
the deflector (8) and the fixing plate (13) form an integral structure.

7. The water heater according to claim 6, **characterized in that**:
openings (71, 130) that match each other for screw fixation are disposed on the top portion (7) of the water retaining cover and the fixing plate (13).

8. The water heater according to claim 7, **characterized in that**:
a pipe sleeve (14) configured to clamp the heating pipe (3) is disposed on the fixing plate (13).

9. The water heater according to claim 8, **characterized in that**:
two fixing plates (13) are respectively symmetrically disposed on two sides of the second end (82) of the deflector (8).

10. The water heater according to claim 1, **characterized in that**:
the heating pipe (3) is a U-shaped heating pipe comprising two horizontal heating pipes (31, 32), wherein
a width of the top portion (7) of the water retaining cover is greater than a distance between the two horizontal heating pipes (31, 32).
